Europäisches Patentamt

European Patent Office

Office européen des brevets

(19)

(11) Veröffentlichungsnummer: **0 047 342
B1**

# (12) EUROPÄISCHE PATENTSCHRIFT

(45) Veröffentlichungstag der Patentschrift:
**11.01.84**

(51) Int. Cl.³: **G 01 F 1/58**

(21) Anmeldenummer: **80200828.4**

(22) Anmeldetag: **04.09.80**

(54) **Messwertaufnahmeeinrichtung für magnetisch-induktive Durchflussmessgeräte.**

(43) Veröffentlichungstag der Anmeldung:
**17.03.82 Patentblatt 82/11**

(45) Bekanntmachung des Hinweises auf die Patenterteilung:
**11.01.84 Patentblatt 84/2**

(84) Benannte Vertragsstaaten:
**FR GB NL**

(56) Entgegenhaltungen:
**DE - A - 1 573 066
US - A - 3 750 468
US - A - 3 924 466
US - A - 4 098 118**

(73) Patentinhaber: **RHEOMETRON AG,
Schützenmattstrasse 43, CH-4003 Basel (CH)**

(72) Erfinder: **Reinhold, Immo, Dr. rer. nat. Dipl.-Phys.,
Friedhofstrasse 110, D-4330 Mülheim (DE)**
Erfinder: **Tromp, Wouter T., Christian Heugens Straat 17,
Sliedrecht (NL)**

(74) Vertreter: **Ackmann, Günther, Dr.-Ing.,
Claubergstrasse 24 Postfach 10 09 22,
D-4100 Duisburg 1 (DE)**

Meßwertaufnahmeeinrichtung für magnetisch-induktive Durchflußmeßgeräte

Die Erfindung betrifft eine Meßwertaufnahmeeinrichtung für magnetisch-induktive Durchflußmesser, bestehend aus einem zylinderförmigen Mantel aus einem ferromagnetischen Material, einem axial in den Mantel eingeschobenen Rohrstück aus einem elektrisch isolierenden Material, Meßelektroden, die in diametral gegenüberliegenden Bohrungen des Rohrstücks angeordnet sind und Magnetspulen, welche mit ihrem Spulenkern diametral gegenüberliegend am Mantel befestigt und zur Erzeugung eines das Rohrstück quer zur Strömungsrichtung durchdringenden Magnetfeldes an eine Stromquelle angeschlossen sind.

Aus der US-A-4 098 118 ist eine Meßwertaufnahmeeinrichtung bekannt, bei der an der Innenfläche eines relativ dünnen zylinderförmigen Mantels diametral gegenüberliegend zwei radial nach innen weisende Magnetspulen festgeschraubt sind. Weiterhin ist ein vom Meßmedium durchströmtes Kunststoffrohr vorgesehen, dessen Außendurchmesser wesentlich kleiner als der Innendurchmesser des Mantels ist und welches an einem Ende einen Flansch aufweist, der den Hohlraum zwischen beiden Bauteilen an einem Stirnende begrenzt und einem Vergußraum bildet. Am Außenmantel des ebenfalls relativ dünnen Kunststoffrohres sind radial nach außen weisende Sockel mit einer Bohrung zur Aufnahme der Elektroden angeformt. Nach der Befestigung der Magnetspulen innerhalb des Mantels wird das mit den Elektroden versehene Kunststoffrohr in den Mantel eingeschoben, und anschließend wird der relativ breite Hohlraum zwischen den beiden Bauteilen mit einer Vergußmasse aus Kunststoff gefüllt, wobei die Magnetspulen und die Meßelektroden in die Vergußmasse eingebettet sind. Diese Ausführung ist mit den Nachteilen verknüpft, die sich beim Vergießen bzw. Spritzgießen von Kunststoffmassen ergeben. Weiterhin sind die Meßelektroden nach dem Vergießen unzugänglich, so daß bei einem Defekt an einem dieser Bauteile in der Regel das ganze Gerät ersetzt werden muß.

Bei einer anderen Ausführung nach der US-A-3 924 466 sind besonders flache Magnetspulen vorgesehen, welche aus einer mit dünnen Stromleiterbahnen versehenen, dünnen und flexiblen Kunststoff-Folie bestehen. Diese werden auf dem Außenmantel eines Kunststoffrohres befestigt und mit diesem zusammen in einen zylinderförmigen Mantel aus einem ferromagnetischen Material eingeschoben. Die diametral einander gegenüberliegenden Meßelektroden sind durch radiale Bohrungen geführt, die sich durch den Mantel, die flache Magnetspule und das Kunststoffrohr erstrecken. Außerdem sind durch den Mantel führende Anschlußbolzen für die Stromleiterbahnen der Magnetspulen vorgesehen. Für einen Magnetfeldrückschluß sind entweder mehrere Lagen einer Metallfolie umgewickelt, oder es wird ein Kunststoffrohr aus einem Duroplast gewählt, welches nach dem Einschieben in den Mantel erhitzt wird, um die Magnetspulen dicht gegen den Mantel zu drücken, der dann als Magnetfeld-Rückschlußelement wirkt. Diese Ausführung erlaubt zwar ein mechanisches Zusammenfügen der Bauteile in Verbindung mit den flachen Magnetspulen, ist jedoch für den Einbau anderer Magnetspulen ungeeignet.

Steht für die Meßwertaufnahmeeinrichtung zwischen den Flanschen der Rohrleitung nur sehr wenig Raum zur Verfügung, schlägt die DE-A-1 573 066 eine besonders schmale Bauart vor, bei der die Meßwertaufnahmeeinrichtung in der Form eines aus einem Isolationsmaterial bestehenden Flansches ausgebildet ist, der die Elektroden und radial eingesetzten Magnetpole enthält, wobei ein bogenförmig um den Flansch geführtes Joch mit einer Magnetspule versehen ist. Abgesehen von der ungünstigen Verteilung des Magnetfeldes benötigt auch diese Ausführung in radialer Richtung viel Platz zur Unterbringung der magnetischen Bauteile.

Demgegenüber liegt der Erfindung die Aufgabe zugrunde, eine Meßwertaufnahmeeinrichtung der gattungsgemäßen Art derart auszubilden, daß die Bauteile mechanisch zusammengefügt werden können, wobei das in den Mantel eingeschobene Rohrstück in seiner Lage zum Mantel fixiert wird, und die Bauteile für Wartungs- und Reparaturzwecke auf einfache Art und Weise wieder auseinandergenommen werden können.

Diese Aufgabe wird dadurch gelöst, daß der Außendurchmesser des Rohrstückes dem Innendurchmesser einer im Mantel vorgesehenen Einstecköffnung entspricht und die von außen her in je eine radiale Ausnehmung des Mantels eingesetzten Magnetspulen mit ihrem Kopfende in eine Sackbohrung des Rohrstückes ragen.

Diese Ausbildung hat zunächst den Vorteil, daß die Anzahl der Bauelemente auf die für eine Meßwertaufnahmeeinrichtung benötigten Grundbauelemente in Gestalt des Rohrstücks aus isolierendem Material, der beiden Meßelektroden, des Mantels aus ferromagnetischem Material und den räumlich einbezogenen Magnetspulen verringert ist. Der Zusammenbau dieser Bauelemente ist besonders einfach, da das mit den Meßelektroden versehene Rohrstück lediglich in den Mantel eingeschoben und die Magnetspulen dann in die betreffenden Ausnehmungen eingeführt zu werden brauchen. Ein wesentlicher Vorteil besteht darin, daß der Mantel die Funktion des Magnetfeld-Rückschlußelementes und des Außengehäuses übernimmt und als Träger für die Magnetspulen dient, also drei Funktionen bzw. Bauelemente in sich vereint. Das Rohrstück aus isolierendem Material hingegen übernimmt die tragende Funktion der Gesamteinrichtung und dient dem Anschluß an die Produktenrohre. Da die nach dem Einschieben des Rohrabschnitts in den Mantel von außen eingesetzten Magnetspulen in Sackbohrungen des Rohrabschnitts hineinragen, werden die rohrförmigen Bauteile gegen eine axiale Verschiebung und gegen Verdrehung fixiert. Die Meßwertaufnahmeeinrichtung ist in ihrer Bauart besonders kompakt und reicht in radialer Richtung nicht über die Abmessungen der Anschlußflansche der Produktenrohre hinaus. Zum Zwecke der Wartung oder der Reparatur ist ein schneller Ausbau möglich.

Zur Befestigung der Magnetspulen am Mantel können die Ausnehmungen im Mantel mit einem Innengewinde versehen sein, in welches die mit einem Gewindekopf versehenen Magnetspulen eingeschraubt sind. Doch ist auch eine Befestigung durch Spannorgane oder durch Vergießen möglich.

Der Einbau der Meßelektroden kann verschiedenartig erfolgen. Entweder die Meßelektroden in die Masse des relativ dickwandigen Rohrstücks eingebettet sein, oder es besteht die Möglichkeit diese von außen her durch Bohrungen des Mantels in die radialen Bohrungen oder in Sackbohrungen des Rohrstücks einzusetzen, wobei im letzteren Falle der Einbau der Meßelektroden erst nach dem Einschieben des Rohrstücks in den Mantel erfolgt. Sind die Bohrungen im Rohrstück als Sackbohrungen ausgeführt, sind die Elektroden gegenüber der Meßflüssigkeit isoliert und bilden kapazitive Meßelektroden.

Der Gegenstand der Erfindung ist in der Zeichnung dargestellt; es zeigt:

Fig. 1 die Bauteile einer Meßwertaufnahmeeinrichtung in einer perspektivischen Darstellung,

Fig. 2 den Gegenstand der Fig. 1 im Zusammenbau und in einer seitlichen Ansicht,

Fig. 3 den Gegenstand der Fig. 2 in einem mittleren Querschnitt,

Fig. 4 eine Magnetspule in einem mittleren Längsschnitt,

Fig. 5 die Befestigung der Meßwertaufnahmeeinrichtung zwischen zwei Anschlußrohren und

Fig. 6 eine andere Befestigung der Meßwertaufnahmeeinrichtung zwischen zwei Anschlußrohren.

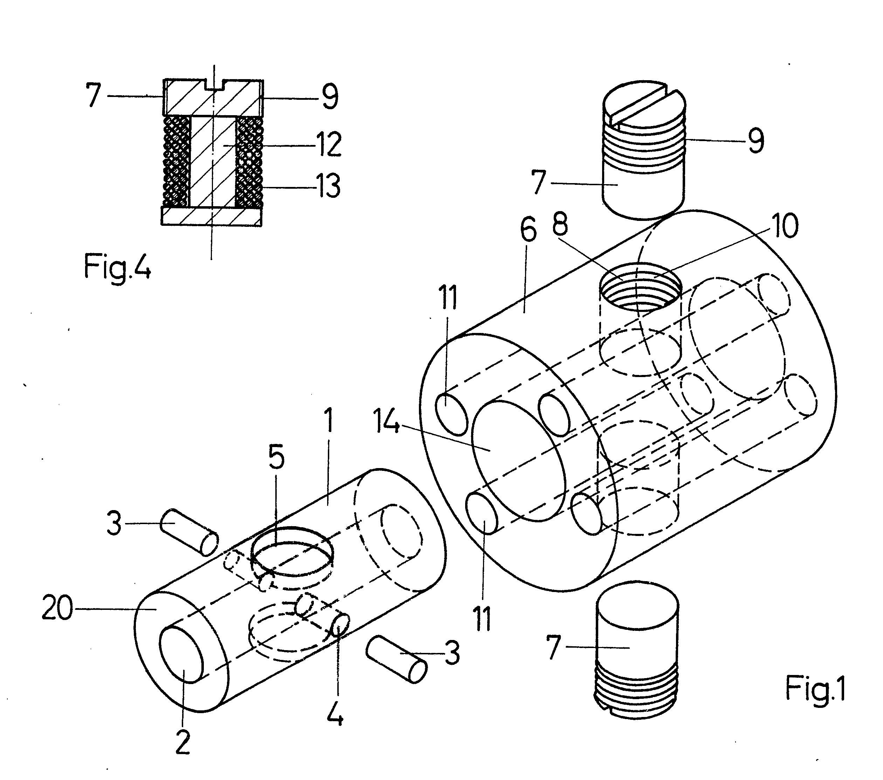

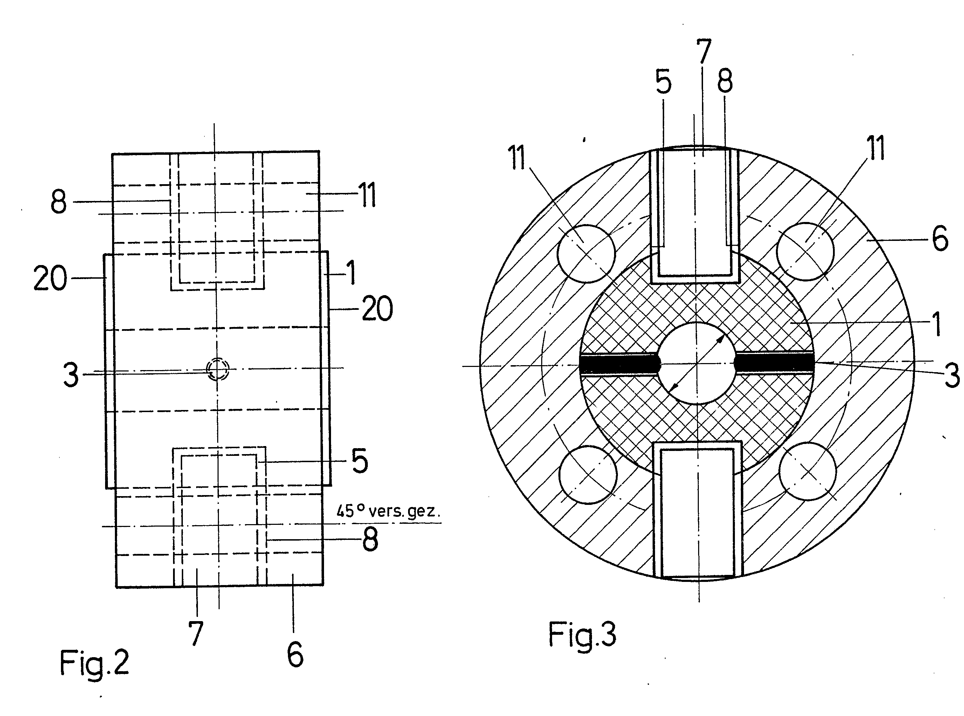

Die in den Fig. 1 bis 3 gezeigten Meßwertaufnahmeeinrichtung besteht im wesentlichen aus einem Rohrstück 1, zwei Meßelektroden 3, einem Mantel 6 und zwei Magnetspulen 7.

Das Rohrstück 1, durch dessen Durchflußöffnung 2 die Meßflüssigkeit strömt, ist aus einem elektrisch isolierenden Material, insbesondere Kunststoff, der auch glasfaserverstärkt sein kann, Keramik oder Glas gefertigt. Der lichte Durchmesser der Durchflußöffnung 2 entspricht der Nennweite, d. h. dem Innendurchmesser der Anschlußrohre. Seitlich sind diametral gegenüberliegend Bohrungen 4 oder entsprechend bei der Herstellung eingeformte Löcher vorhanden, in welche die Meßelektroden 3 eingeführt und befestigt werden. Der Befestigung und Abdichtung gegenüber der Durchflußöffnung 2 können Schraubgewinde, Spann- und Dichtungsringe oder Vergußmassen dienen (in der Zeichnung nicht dargestellt). Rechtwinklig zu den Bohrungen 4 liegend sind radial geführte Sackbohrungen 5 angeordnet oder eingeformt, die jeweils das Kopfende einer Magnetspule 7 aufnehmen. Die Wandstärke des Rohrstücks 1 ist in Abhängigkeit von der Festigkeit des Materials relativ groß. Aus Kunststoff gefertigte Rohrstücke lassen sich durch Spritzgießen o. dgl. herstellen, wobei die Bohrungen 4 und Sackbohrungen 5 gleich eingeformt werden können. Es ist auch möglich, die Meßelektroden 3 beim Spritzgießen gleich einzubetten.

Der Mantel 6 besteht aus einem ferromagnetischen Material. Vom Aufbau her bildet er einen Hohlzylinder, mit einer Einsteckbohrung 14 für das Rohrstück 1, wobei deren Innen- bzw. Außendurchmesser einander entsprechen. An zwei Seiten sind diametral gegenüberliegend zwei Ausnehmungen 8 vorgesehen, die mit einem Innengewinde 10 versehen sind. Außerdem sind im Mantel 6 vier koaxial verlaufende Durchstecköffnungen 11 vorgesehen. Die axiale Länge des Mantels 6 ist etwas kleiner als die des Rohrstücks 1, so daß die Stirnenden 20 des Rohrstückes 1 etwas herausragen. Wird der Mantel 6 aus einem ferromagnetischen Gußmaterial gefertigt, können die vorgenannte Bohrung 14, die Ausnehmungen 8 und die Durchstecköffnungen 11 gleich eingeformt werden.

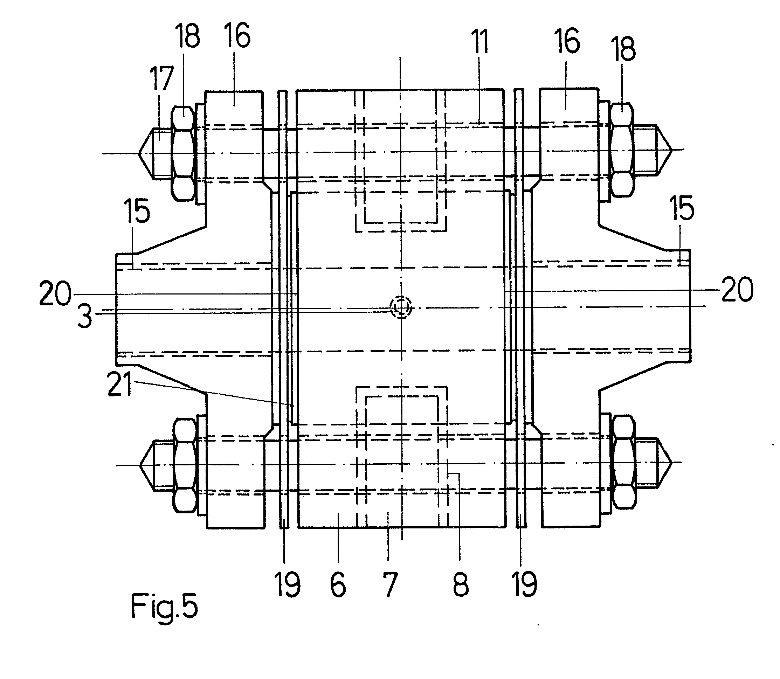

Der Zusammenbau der Meßwertaufnahmeeinrichtung geschieht durch einfaches Ineinanderstecken des mit den Meßelektroden versehenen Rohrstücks 1 und des Mantels 6. Danach sind lediglich noch zwei mit einem Gewindekopf 9 versehene Magnetspulen 7 in die Ausnehmungen 8 zu schrauben, wobei diese in die Sackbohrungen 5 des Rohrstücks 1 ragen und die Bauteile gleichzeitig gegen eine axiale Verschiebung und gegen Verdrehung fixieren. Die Magnetspulen 7 besitzen, wie Fig. 4 zeigt, einen bolzenartigen Spulenkern 12, um den herum die Spulenwicklung 13 liegt. Die Spulenkerne 12, die Gewindeköpfe 9 und der ferromagnetische Mantel 6 bilden zusammen das Magnetfeld-Rückschlußelement.

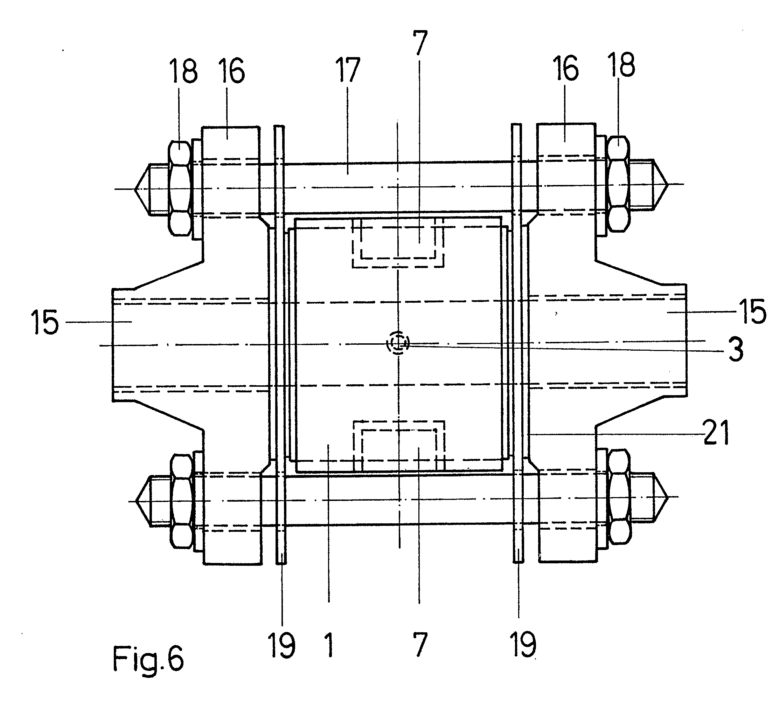

Die vorstehend beschriebene Meßwertaufnahmeeinrichtung wird, wie Fig. 5 zeigt, zwischen den Flanschen 16 der einer Produktenleitung zugehörigen Anschlußrohre 15 mittels Längsbolzen 17 und Spannmuttern 18 verspannt. Dabei sind noch an sich bekannte Erdungsringe 19 zwischengelegt. Das auf diese Art und Weise abdichtend eingespannte Rohrstück 1 trägt die anderen Bauteile der Meßwertaufnahmeeinrichtung. Bei der in Fig. 5 gezeigten Ausführung ragen die vier Langbolzen 17 durch die vier Einsteckbohrungen 14, während sie bei der Ausführung nach Fig. 6 außerhalb des Mantels 6 verlaufen. Sind Erdungsringe 19 vorgesehen, müssen zwischen diese und dem betreffenden Flansch 16 Dichtungsringe 21 gelegt werden. Bedarf es aber keiner Erdungsringe und besteht das Rohrstück 1 aus Kunststoff, werden keine Dichtungsringe benötigt, da die vorstehenden Stirnenden 20 dann abdichtend gegen die Flansche anliegen.

Die neuartige Bauart läßt sich vielseitig abwandeln. Anstelle der beiden Magnetspulen 7 können zur Bildung bestimmter Magnetfelder auch mehr Magnetspulen paarweise nebeneinanderliegend vorgesehen sein. Die Magnetspulen 7 lassen sich anstelle der beschriebenen Schraubbefestigung auch durch andere Organe, z. B. Spannorgane o. dgl., oder durch Vergießen in den Ausnehmungen fixieren. Ebenfalls sind verschiedene Elektrodenanordnungen möglich; die Meßelektroden können beispielsweise nach dem Einstecken des Rohrstücks 1 in den Mantel 6 durch radial im Mantel angeordnete Bohrungen gesteckt und durch Verschraubung, Verspannung oder Vergießen fixiert werden. Weiterhin können diese als kapazitive Elektroden ausgebildet sein, wobei die Bohrungen 4 als Sackbohrungen ausgebildet sind. Auch können am Mantel 6 Halterungen oder Traversen angebracht oder angeformt sein, die der Befestigung eines Klemmengehäuses oder eines Meßwertumformers dienen. Schließlich kann der Mantel 6 auch eine halbschalenartige Ausbildung erhalten.

**Patentansprüche:**

1. Meßwertaufnahmeeinrichtung für magnetisch-induktive Durchflußmesser, bestehend aus einem zylinderförmigen Mantel (6) aus einem ferromagnetischen Material, einem axial in den Mantel (6) eingeschobenen Rohrstück (1) aus einem elektrisch isolierenden Material, Meßelektroden (3), die in diametral gegenüberliegenden Bohrungen (4) des Rohrstücks (1) angeordnet sind und Magnetspulen (7), welche mit ihrem Spulenkern (12) diametral gegenüberliegend am Mantel (6) befestigt und zur Erzeugung eines das Rohrstück (1) quer zur Strömungsrichtung durchdringenden Magnefeldes an eine Stromquelle angeschlossen sind, dadurch gekennzeichnet, daß der Außendurchmesser des Rohrstücks (1) dem Innendurchmesser einer im Mantel (6) vorgesehenen Einstecköffnung entspricht und daß die von außen her in je eine radiale Ausnehmung (8) des Mantels (6) eingesetzten Magnetspulen (7) mit ihrem Kopfende jeweils in eine Sackbohrung (5) des Rohrstücks (1) ragen.

2. Meßwertaufnahmeeinrichtung nach Anspruch 1, dadurch gekennzeichnet, daß die Ausnehmungen (8) im Mantel (6) mit einem Innengewinde (10) versehen sind, in welche die mit einem Gewindekopf (9) versehenen Magnetspulen (7) eingeschraubt sind.

3. Meßwertaufnahmeeinrichtung nach Anspruch 1 oder 2, dadurch gekennzeichnet, daß die Meßelektroden (3) entweder in der Masse des Rohrstücks (1) eingebettet oder von außen her durch Bohrungen des Mantels (6) in die radialen Bohrungen (4) bzw. Löcher oder in Sackbohrungen des Rohrstücks (1) eingesetzt sind.

**Claims**

1. A pick-up device for flowmeters of the magnetic induction type, comprising a cylindrical jacket (6) of a ferromagnetic material, a tubular member (1) of an electrically insulating material axially inserted into the jacket (6), measuring electrodes (3) disposed in diametrically opposite bores (4) in the tubular member (1) and solenoids (7) secured to the jacket (6) with their cores (12) diametrically opposite one another, said solenoids being connected to a power supply in order to generate a magnetic field which extends through the tubular member (1) transversely of the direction of flow, characterised in that the outside diameter of the tubular member (1) is equivalent to the inside diameter of a socket provided in the jacket (6) and the solenoids (7) each of which is inserted from outside into a radial recess (8) in the jacket (6) each project by their head end into a blind bore (5) in the tubular member (1).

2. A pick-up device according to ·claim, characterised in that the recesses (8) in the jacket (6) have an internal screwthread (10) into which the solenoids (7), which have a screwthreaded head (9), are screwed.

3. A pick-up device according to claim 1 or 2, characterised in that the measuring electrodes (3) are either embedded in the material of the tubular member (1) or are inserted from outside through bores in the jacket (6) into the radial bores (4) or holes or blind bores in the tubular member (1).

**Revendications**

1. Capteur de valeurs de mesure pour débitmètres fonctionnant par induction magnétique, constitué d'une enveloppe cyclindrique (6) en un matériau ferromagnétique, d'un tronçon de tube (1) engagé axialement dans l'enveloppe (6) et en un matériau isolant électriquement, d'électrodes de mesure (3) disposées dans des perçages (4) opposés diamétralement du tronçon de tube (1), et d'électroaimants (7), dont les noyaux (12) sont fixés à l'enveloppe (6) en étant opposés diamétralement et qui, pour la production d'un champ magnétique traversant le tronçon de tube (1) transversalement à la direction d'écoulement, sont raccordés à une source de courant électrique, caractérisé en ce que le diamètre extérieur de tronçon de tube (1) correspond au diamètre intérieur d'une ouverture d'introduction prévue dans l'enveloppe (6) et en ce que les extrémités des têtes des électroaimants (7) engagés de l'extérieur respectivement dans des évidements radiaux (8) de l'enveloppe font saillie respectivement dans des trous borgnes (5) du tronçon de tube (1).

2. Capteur de valeurs de mesure suivant la revendication 1, caractérisé en ce que les évidements (8) ménagés dans l'enveloppe (6) sont munis de taraudages (10) dans lesquels se vissent les électroaimants (7) munis de têtes filetées (9).

3. Capteur de valeurs de mesure suivant la revendication 1 ou 2, caractérisé en ce que les électrodes de mesure (3) sont noyées dans la masse du tronçon de tube (1) ou sont introduites de l'extérieur par des perçages de l'enveloppe (6) dans les perçages radiaux (4) ou dans des trous ou dans des trous borgnes du tronçon de tube (1).

7 —— 9

12

13

Fig.4

9

7

6  8                    10

11

1

14

3

20

11

3

4

7

2

Fig.1

0 047 342

Fig.2

Fig.3

45° vers. gez.

0 047 342

Fig.5

Fig.6